# FASCICULE DE BREVET EUROPEEN

(11) **EP 0 636 806 B1**
(45) Date de publication et mention de la délivrance du brevet: **07.01.1998**
(21) Numéro de dépôt: 94401533.8
(22) Date de dépôt: 05.07.1994
(51) Int. Cl.: F16D 23/14, F16D 23/12

(54) **Dispositif de commande d'embrayage**
Kupplungsausrücklager
Clutch release mechanism

(30) Priorité: 29.07.1993 FR 9309323
(43) Date de publication de la demande: 01.02.1995
(73) Titulaire: RENAULT VEHICULES INDUSTRIELS Société Anonyme dite:, 69003 Lyon (FR)
(72) Inventeur: Mutrel, Daniel, F-38122 Cour et Buis (FR)
(74) Mandataire: Ernst-Schonberg, Michel

(56) Documents cités:
- DE-A- 4 025 213
- FR-A- 1 376 167
- GB-A- 2 117 476
- US-A- 2 121 626
- PRODUCT ENGINEERING,vol.27,no11,page F32 octobre 1956 'Product Design Digest Issue' MORGAN-GRAMPIAN Publishing Corp.,NY,USA * figure 4 *

## Description

L'invention concerne un dispositif de commande d'embrayage, notamment pour véhicule automobile, comportant une butée annulaire déplaçable vis-à-vis d'un diaphragme de rappel, sous l'action d'une fourchette de débrayage.

L'augmentation du couple observée sur certains types de moteurs, conduit les constructeurs à augmenter sensiblement le tarage des mécanismes d'embrayage utilisés sur les véhicules correspondants. Lorsque l'opération de débrayage est assurée par une butée se déplaçant vis-à-vis d'un diaphragme sous l'action d'une fourchette, l'augmentation du tarage se traduit par une augmentation des efforts supportés par la butée et la fourchette. Si ces efforts deviennent trop importants, le positionnement relatif de ces deux éléments et de leurs surfaces d'appui, pose un problème d'indexage particulier.

Par la publication FR 2 624 573, on connaît une butée de débrayage comportant une coupelle de positionnement liée à la fourchette de manoeuvre, qui coopère avec les doigts de la fourchette, en maintenant élastiquement ces derniers en appui sur la butée. Cette disposition présente l'inconvénient de soumettre la fiabilité de l'indexage à un organe de positionnement additionnel.

La présente invention a pour but d'améliorer l'indexage d'une fourchette sur une butée de débrayage, sans recourir à une pièce supplémentaire.

Ce problème est résolu en réalisant un dispositif de commande d'embrayage qui comporte une butée annulaire déplaçable axialement vis-à-vis d'un diaphragme élastique de rappel en position embrayée sous l'action d'une fourchette de débrayage, dans lequel l'appui de la fourchette sur la butée est assuré par l'intermédiaire de galets montés sur les doigts de la fourchette.

Selon l'invention, la butée présente deux bras latéraux permettant l'indexage de la fourchette, et l'appui des galets sur celle-ci.

Selon un mode de réalisation de l'invention, chaque bras latéral présente une surface longitudinale extérieure permettant l'indexage de la fourchette, et une surface transversale permettant l'appui d'un galet.

Selon un mode de réalisation de l'invention, chaque galet est libre en rotation sur un axe traversant le doigt de la fourchette.

Selon un mode de réalisation de l'invention, chaque galet est disposé contre la face intérieure d'un doigt de la fourchette.

Selon un mode de réalisation de l'invention, les galets sont écartés latéralement des bras latéraux.

Selon un mode de réalisation de l'invention, les galets sont des galets à aiguilles.

L'invention sera mieux comprise à la lecture de la description suivante d'un mode de réalisation particulier de celle-ci, en liaison avec les dessins annexés, sur lesquels :
- la figure 1 est une vue d'ensemble d'un mécanisme d'embrayage à butée annulaire équipé d'un dispositif de commande conforme à l'invention,
- les figures 2A, 2B et 2C sont respectivement une vue latérale en position embrayée, une vue latérale en position débrayée, ainsi qu'une vue frontale en position débrayée, de ce dispositif, et
- la figure 3 est une coupe effectuée selon l'axe A-A de la figure 2C.

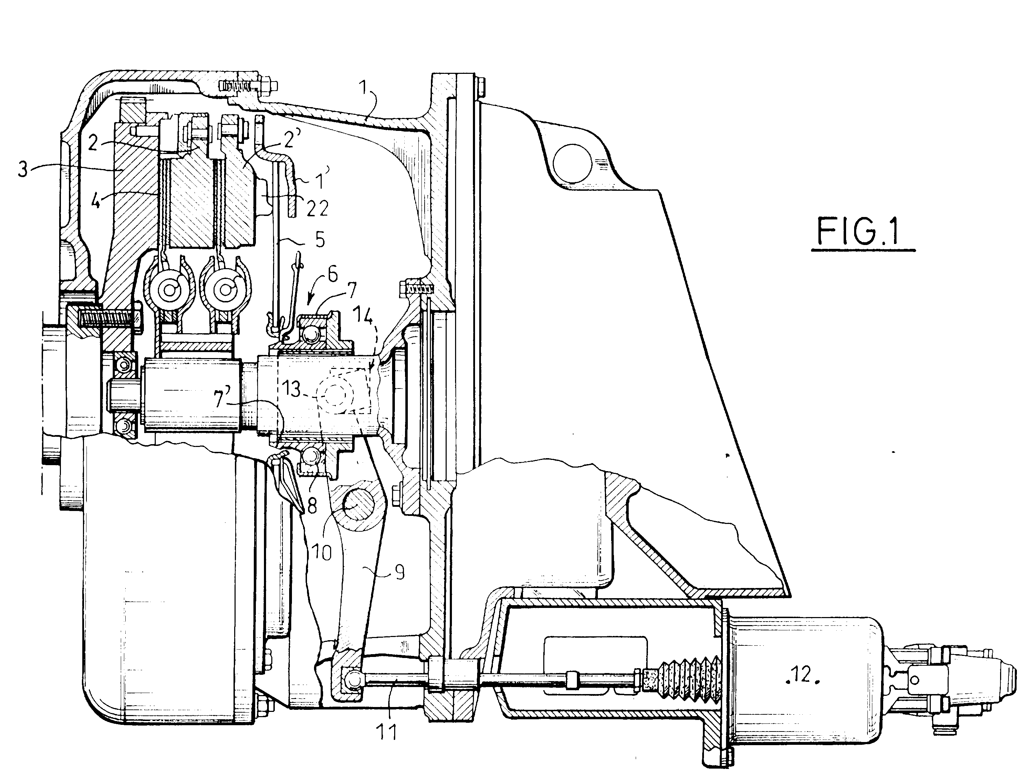

Le mécanisme d'embrayage représenté sur la figure 1 comporte à l'intérieur d'un carter 1, un double plateau de pression 2, 2' et un volant moteur 3, munis de garnitures de friction 4. Le double plateau 2, 2' est pressé élastiquement contre le volant 3 par le diaphragme 5, en appui contre des épaulements 22 du plateau extérieur et une partie fixe du carter 1'. La butée de débrayage 6 présente deux bagues annulaires 7, 7' concentriques, séparées par une couronne de billes 8. La bague intérieure 7' est fixée sur la base du diaphragme 5. La butée 6 est associée à une fourchette de débrayage 9 pouvant pivoter autour de son axe 10 sous l'action de la tige 11 d'un vérin de commande 12. De façon classique, lorsque la tige 11 du vérin 12 exerce une poussée sur l'extrémité inférieure de la fourchette 9, celle-ci pivote autour de son axe 10 en entraînant la butée 6 et la base du diaphragme 5. Ce mouvement dégage le diaphragme 5 de l'épaulement 22 du plateau extérieur 2', et assure le débrayage de la transmission.

Conformément à l'invention, la fourchette 9 est en appui sur la butée 6 par l'intermédiaire de galets 13 apparaissant en pointillés sur la figure 1, de même que les bras latéraux 14 de la butée 6 et l'extrémité supérieure des doigts 15 de la fourchette 6, ces trois éléments n'étant pas dans le plan de coupe.

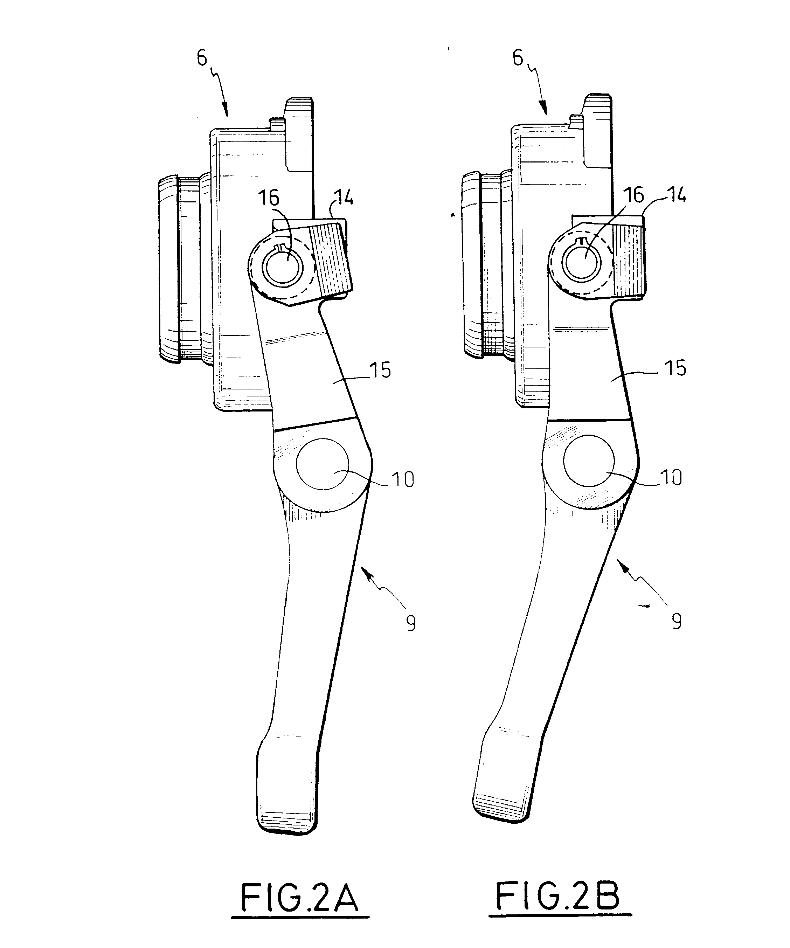

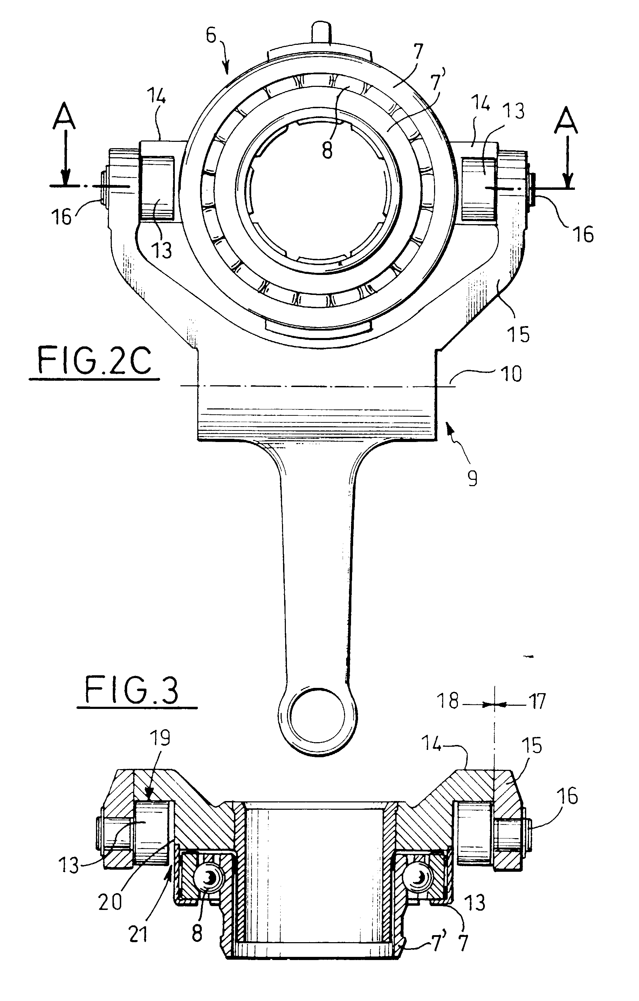

Sur les figures 2 A, 2B et 2C, on reconnaît les bras latéraux 14 de la butée 6, et l'extrémité supérieure de la fourchette 9. Comme indiqué plus haut, celle-ci bascule autour de son axe 10, sous l'action du vérin 12, pour passer de la position occupée sur la figure 2A à celle de la figure 2B. Afin d'opérer ce déplacement, les doigts 15 de la fourchette 9 prennent appui sur les bras 14 de la butée 6 par l'intermédiaire des galets 13, tels que des galets à aiguilles, portés par un axe 16 traversant le doigt 15 de la fourchette 9.

La figure 3 montre que les doigts 15 sont en appui contre la face latérale extérieure 17 des bras 14, tandis que les galets 13 portent contre la face latérale intérieure 18 des doigts 15, et contre une face transversale 19 de chaque bras 14, tout en étant écartés latéralement de ces derniers. Conformément à cette disposition, l'interface de la fourchette 9 et de la butée 6, ou interface d'indexage 17, 18, est orientée dans la direction longitudinale de la butée 6, alors que la surface d'appui 19 de la fourchette 9 sur la butée 6 est transversale. La disposition proposée par l'invention permet donc de dissocier l'interface d'indexage 17, 18, de la surface d'appui 19 entre la fourchette 9 et la butée 6. Grâce à l'invention, l'indexage de la fourchette 9 peut être réalisé indépendamment de toute contrainte relative à la transmission des efforts et à la tolérance des surfaces de contact. Le positionnement obtenu est très précis et n'est pas affecté par le travail des doigts 15 de la fourchette 9 sur les bras 14 de la butée 6 lors du fonctionnement du dispositif.

Par ailleurs, la rotation des galets 13 sur leur axe 16 permet à la fourchette 9 et à la butée 6 de se déplacer l'une par rapport à l'autre en transmettant les efforts nécessaires à la commande de l'embrayage, sans frottements au niveau des surfaces d'appui 19. Enfin, le jeu 21 existant entre la face intérieure 20 des bras 14 et les galets 13 permet d'isoler ces derniers des vibrations induites par le moteur.

## Revendications

1. Dispositif de commande d'embrayage comportant une butée annulaire (6) munie de deux bras latéraux (14) déplaçables axialement vis-à-vis d'un diaphragme (5) élastique de rappel en position embrayée sous l'action d'une fourchette de débrayage (9) prenant appui par des galets (13) sur lesdits bras latéraux (14), caractérisé en ce que chaque bras latéral (14) présente une surface longitudinale extérieure (17) permettant l'indexage de la fourchette (9), et une surface transversale (19) permettant l'appui d'un galet (13).

2. Dispositif de commande d'embrayage selon la revendication 1, caractérisé en ce que chaque galet (13) est libre en rotation sur un axe (16) traversant le doigt (15) de la fourchette (9).

3. Dispositif de commande d'embrayage selon la revendication 2, caractérisé en ce que chaque galet (13) est disposé contre la face intérieure (18) d'un doigt (15) de la fourchette (9).

4. Dispositif de commande d'embrayage selon la revendication 2 ou 3, caractérisé en ce que les galets (13) sont écartés latéralement des bras latéraux (14).

5. Dispositif de commande d'embrayage selon l'une quelconque des revendications précédentes, caractérisé en ce que les galets (13) sont des galets à aiguilles.

## Patentansprüche

1. Steuervorrichtung für eine Kupplung, mit einem ringförmigen Ausrücklager (6), das mit zwei seitlichen Armen (14) versehen ist, die in eingerückter Stellung durch eine Kupplungsgabel (9), welche durch Rollen (13) die seitlichen Arme (14) beaufschlagt, axial gegenüber einer federnden Rückstell-Federplatte (5) verschiebbar sind, dadurch gekennzeichnet, dass jeder seitliche Arm (14) eine äussere längsgerichtete Oberfläche (17) aufweist, die die Anlage der Gabel (9) ermöglicht, und eine quergerichtete Oberfläche (19), die durch eine Rolle (13) beaufschlagbar ist.

2. Steuervorrichtung für eine Kupplung nach Anspruch 1, dadurch gekennzeichnet, dass jede Rolle (13) frei drehbar ist auf einer Achse (16), die quer durch die Klaue (15) der Gabel (9) verläuft.

3. Steuervorrichtung für eine Kupplung nach Anspruch 2, dadurch gekennzeichnet, dass jede Rolle (13) an der Innenfläche (18) einer Klaue (15) der Gabel (9) angeordnet ist.

4. Steuervorrichtung einer ausrückbaren Kupplung nach Anspruch 2 oder 3, dadurch gekennzeichnet, dass die Rolle (13) seitlich von den seitlichen Armen (14) abgerückt sind.

5. Steuervorrichtung für eine Kupplung nach einem der vorhergehenden Ansprüche, dadurch gekennzeichnet, dass die Rollen (13) Nadellager sind.

## Claims

1. A clutch control device comprising an annular bearing (6) provided with two lateral arms (14) displaceable axially in relation to an elastic diaphragm (5) for return movement into the engaged position, by the action of a clutch release fork (9) which bears by means of rollers (13) on said lateral arms (14), characterised in that each lateral arm (14) has an external longitudinal surface (17) permitting the indexing of the fork (9), and a transverse surface (19) permitting support for a roller (13).

2. A clutch control device according to Claim 1, characterised in that each roller (13) is free to rotate on a shaft (16) passing through the prong (15) of the fork (9).

3. A clutch control device according to Claim 2, characterised in that each roller (13) is disposed against the inner face (18) of a prong (15) of the fork (9).

4. A clutch control device according to Claim 2 or Claim 3, characterised in that the rollers (13) are distanced laterally from the lateral arms (14).

5. A clutch control device according to any one of the preceding claims, characterised in that the rollers (13) are needle rollers.
